# EUROPÄISCHE PATENTANMELDUNG

(11) **EP 0 781 030 A2**
(43) Veröffentlichungstag der Anmeldung: **25.06.1997**
(21) Anmeldenummer: 96120345.2
(22) Anmeldetag: 18.12.1996
(51) Int. Cl.: H04M 11/00

(54) **Verfahren zum Betreiben eines Telefonnetzes und digitale Telefonanlage**

(30) Priorität: 22.12.1995 DE 19548159
(71) Anmelder: ROBERT BOSCH GMBH, 70442 Stuttgart (DE)
(72) Erfinder: Klingenberg, Wolfgang, 31246 Lahstedt (DE); Meschenmoser, Reinhard, 30459 Hannover (DE); Kalkbrenner, Hans-Joachim, 38667 Bad Harzburg (DE)

(57) **Zusammenfassung**

Es wird ein Verfahren zum Betreiben eines Telefonnetzes und eine digitale Telefonanlage (5) zur Modulation der auf einer Telefonleitung ankommenden Daten auf einen Hochfrequenzträger, der in einem freien Bereich eines rückkanalfähigen Breitbandkabels (15, 16) liegt und in dieses eingespeist wird, vorgestellt. An das Breitbandkabel (15, 16) sind in vorgegebenen Abständen auf diesen Bereich abgestimmte Funkanlagen (11) angeschlossen, die diese Daten auf vorgegebenen Frequenzen abstrahlen. Auf diese Weise ist ein flächendeckender Einsatz von schnurlosen Telefonen (45) möglich. Als rückkanalfähiges Breitbandkabel (15, 16) wird vorzugsweise ein Koaxialkabel für TV-Übertragung verwendet. Über eine Frequenzweiche (25) werden dem rückkanalfähigen Breitbandkabel (15, 16) neben dem HF-Träger mit den modulierten Daten Fernseh- und/oder Rundfunksignale eingespeist. Das in den Funkanlagen (11) ankommende HF-Signal mit den modulierten Daten wird in die Frequenz von vorgesehenen Funk-Kanälen zum Datenaustausch mit den schnurlosen Telefonen (45) umgesetzt. Die Frequenzweiche (25) weist Filtereinrichtungen auf, die verhindern, daß Fernseh- beziehungsweise Rundfunkdaten in das Telefonnetz beziehungsweise Fernsprechdaten in eine Kopfstation (90) zur Rundfunk- und/oder Fernsehrundfunkübertragung gelangen.

## Beschreibung

### Stand der Technik

Die Erfindung geht von einem Verfahren zum Betreiben eines Telefonnetzes nach dem unabhängigen Anspruch 1 und von einer digitalen Telefonanlage nach dem unabhängigen Anspruch 7 aus.

Aus der Druckschrift "THE SIXTH INTERNATIONAL SYMPOSIUM ON SUBSCRIBERS LOOPS AND SERVICES, PROCEEDINGS ", 1. bis 5. Oktober 1984, Nizza, der Société des Electriciens, des Electroniciens et des Radioélectriciens Section Française de l'I.E.E.E. ist ein Multiservicenetzwerk bekannt, das dazu vorgesehen ist, Terminals, die bei Teilnehmern installiert sind, mit zwei grundsätzlich verschiedenen Untersystemen zu verbinden, die zweierlei Arten von Dienstleistungen darstellen:
- Fernsprechuntersystem
- Audio- und TV-Programmverteilungsuntersystem.

Das Multiservicenetzwerk basiert auf optischen Faserverbindungen, wobei die Verbindung zwischen Netzwerk und Teilnehmer eine Netzabschlußeinheit auf der Teilnehmerseite und eine Multiserviceverbindungseinheit, die die Schnittstelle zu den zwei Untersystemen bildet, umfaßt. Der Anschluß der Netzabschlußeinheit an das Netzwerk erfolgt über zwei optische Fasern. Der Transport der entsprechenden Signale für die beiden Untersysteme erfolgt auf Teilnehmerseite auf einem Teilnehmerbus, der aus einem Koaxialkabel und zwei symmetrischen Aderpaaren besteht. Die symmetrischen Aderpaare dienen der Signalisierung, der Tonübertragung und der Stromversorgung. Das Frequenzband des Koaxialkabels ist in Frequenzbereiche für Audio-Programme, für TV-Programme und für Videophonie eingeteilt. Die Terminals der Teilnehmer selbst sind über Draht mit dem Teilnehmerbus verbunden.

### Vorteile der Erfindung

Das erfindungsgemäße Verfahren mit den Merkmalen des unabhängigen Anspruchs 1 hat demgegenüber den Vorteil, daß durch die Verwendung von Funkanlagen die Fernsprechteilnehmer nicht über Draht an einen Teilnehmerbus angeschlossen werden müssen. Auf diese Weise lassen sich Aufwand und Kosten gegenüber einem drahtgebundenen System einsparen.

Als weiterer Vorteil ist anzusehen, daß die Fernsprechteilnehmer nicht ortsgebunden sind, sondern innerhalb der von den Funkanlagen abgedeckten Funkzellen an beliebiger Stelle über Fernsprechverbindungen erreichbar sind.

Besonders vorteilhaft ist auch, daß mehrere Funkanlagen über ein einziges Breitbandkabel mit der Auswerteeinrichtung verbunden sind, so daß separate Verbindungsleitungen zwischen den einzelnen Funkanlagen und der Auswerteeinrichtung und damit zusätzlich Aufwand und Kosten eingespart werden.

Durch die in den Unteransprüchen aufgeführten Maßnahmen sind vorteilhafte Weiterbildungen und Verbesserungen des im unhängigen Anspruch 1 angegebenen Verfahrens möglich.

Besonders vorteilhaft gemäß Anspruch 2 ist die Verwendung eines Koaxialkabels für TV-Übertragung. Durch diese Maßnahme wird erreicht, daß keine zusätzliche Verlegung von Verbindungsleitungen zwischen der Auswerteeinrichtung und den Funkanlagen benötigt wird, sondern das bestehende TV-Koaxialkabel mitbenutzt wird. Auf diese Weise lassen sich wiederum zusätzlich Aufwand und Kosten einsparen.

Die Verwendung eines Lichtwellenleiters gemäß Anspruch 3 hat den Vorteil, daß eine hohe Übertragungskapazität zur Verfügung gestellt werden kann.

Vorteilhaft gemäß Anspruch 4 und Anspruch 5 ist die Verwendung einer Frequenzweiche bzw. eines Richtkopplers. Durch diese Maßnahme wird erreicht, daß Fernseh- und/oder Rundfunksignale nicht an die Auswerteeinrichtung beziehungsweise Fernsprechsignale nicht in die Kopfstation zur Übertragung der Fernseh- und/oder Rundfunksignale gelangen und auf diese Weise Störungen der Fernseh- und/oder Rundfunksignale beziehungsweise der Fernsprechsignale vermieden werden.

Durch die im unabhängigen Anspruch 7 aufgeführte digitale Telefonanlage ist eine vorteilhafte Realisierung des Verfahrens gemäß dem unabhängigen Anspruch 1 möglich.

Durch die Verwendung eines Modulators lassen sich die auf einer Telefonleitung in die digitale Telefonanlage einlaufenden Daten auf einfache Weise in die Frequenzlage eines freien Bereichs des Breitbandkabels umsetzen.

Auf ebenfalls einfache Weise lassen sich die in die digitale Telefonanlage einlaufenden HF-Signale durch einen Demodulator auf die Frequenzlage des Fernsprechnetzes Umsetzen.

Durch die in den abhängigen Ansprüchen aufgeführten Maßnahmen sind vorteilhafte Weiterbildungen und Verbesserungen der im unabhängigen Anspruch 7 angegebenen digitalen Telefonanlage möglich.

Besonders vorteilhaft ist die einfache und wenig aufwendige Trennung der Fernseh- und/oder Rundfunksignale von den Fernsprechdaten durch Filtereinrichtungen in der Frequenzweiche bzw. durch den Richtkoppler gemäß den Ansprüchen 8 bis 10.

### Zeichnung

Ein Ausführungsbeispiel der Erfindung ist in der Zeichnung dargestellt und in der nachfolgenden Beschreibung näher erläutert. Es zeigen Figur 1 die Versorgung eines Wohnblocks mit Fernseh- und/oder Rundfunksignalen und mit Fernsprechdaten über Breitbandkabel, Figur 2 eine digitale Nebenstellenanlage, Figur 3 ein Beispiel für die Einteilung des Frequenzbandes eines Breitbandkabels für die Übertragung von Rundfunk-, TV- und Fernsprechsignalen, Figur 4 eine Frequenzweiche und Figur 5 eine Funkanlage.

### Beschreibung des Ausführungsbeispiels

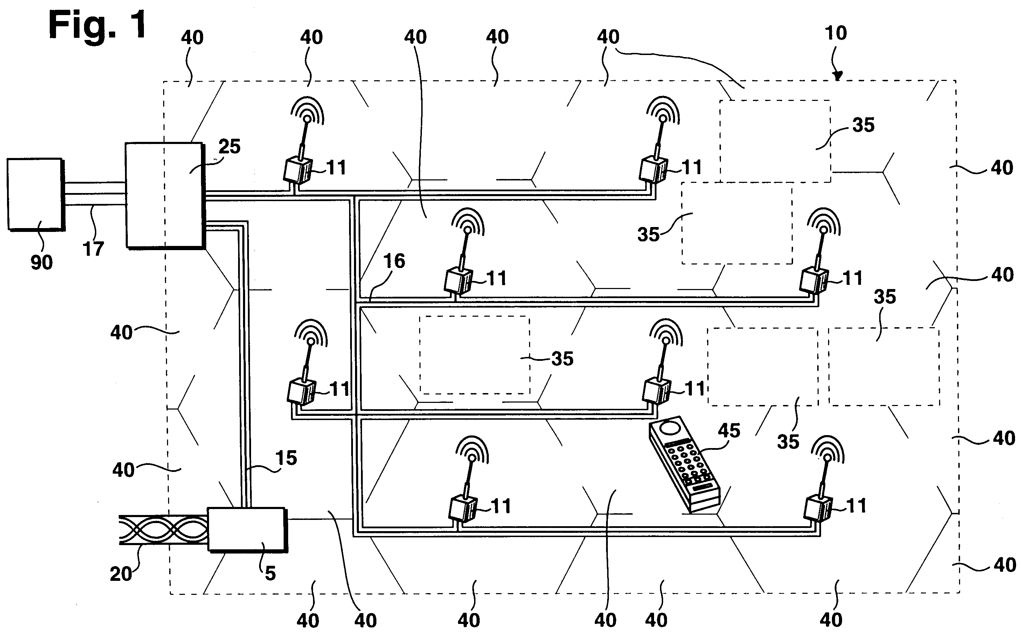

In Figur 1 kennzeichnet 5 eine als digitale Telefonanlage ausgebildete Auswerteeinrichtung, die eine digitale Nebenstellenanlage darstellt und über eine ISDN-Sₒ-Schnittstelle 20 mit einem Fernsprechnetz verbunden ist. Die Schnittstelle 20 kann auch eine n*Sₒ- oder U_{Po}-Schnittstelle für den Basisanschluß oder eine S_{2M}- bzw. n*S_{2M}-Schnittstelle für einen Primäranschluß oder dergleichen sein. Die digitale Nebenstellenanlage 5 ist über ein erstes rückkanalfähiges Breitbandkabel 15 mit einer Frequenzweiche 25 verbunden. Da zwischen der digitalen Nebenstellenanlage 5 und der Frequenzweiche 25 nur Fernsprechsignale ausgetauscht werden, muß das erste rückkanalfähige Kabel 15 nicht unbedingt breitbandig sein. An die Frequenzweiche 25 sind über ein zweites rückkanalfähiges Breitbandkabel 16 mehrere Funkanlagen 11 angeschlossen, deren Reichweite jeweils auf eine Funkzelle 40 beschränkt ist. Die Funkzellen 40 sind einander benachbart in einem Wohnblock 10 angeordnet, so daß jeder Punkt im Wohnblock 10 innerhalb der Reichweite einer Funkanlage 11 liegt. Innerhalb des Wohnblocks 10 sind Wohnungen 35 angeordnet. Die Teilnahme der Bewohner des Wohnblocks 10 am Fernsprechverkehr erfolgt über schnurlose Telefone 45. Die Frequenzweiche 25 ist über ein drittes rückkanalfähiges Breitbandkabel 17 mit einer Kopfstation 90 für Fernseh- und/oder Rundfunkübertragung verbunden. Die Rückkanalfähigkeit des dritten Breitbandkabels 17 ist nur für Multimediaanwendungen erforderlich, ansonsten muß sie nicht unbedingt vorhanden sein. Aus Gründen der Übersichtlichkeit ist in Figur 1 nicht in jeder Funkzelle 40 die zugehörige Funkanlage 11 und ihr Anschluß an das zweite rückkanalfähige Breitbandkabel 16 dargestellt.

Die flächendeckende Versorgung des Wohnblocks 10 mit den Funkzellen 40 ermöglicht den flächendeckenden Einsatz von Schnurlostelefonen 45 im gesamten Wohnblock 10, so daß ein Bewohner des Wohnblocks 10 nicht nur in den Wohnungen 35 telefonisch erreichbar ist, sondern im gesamten Wohnblock 10.

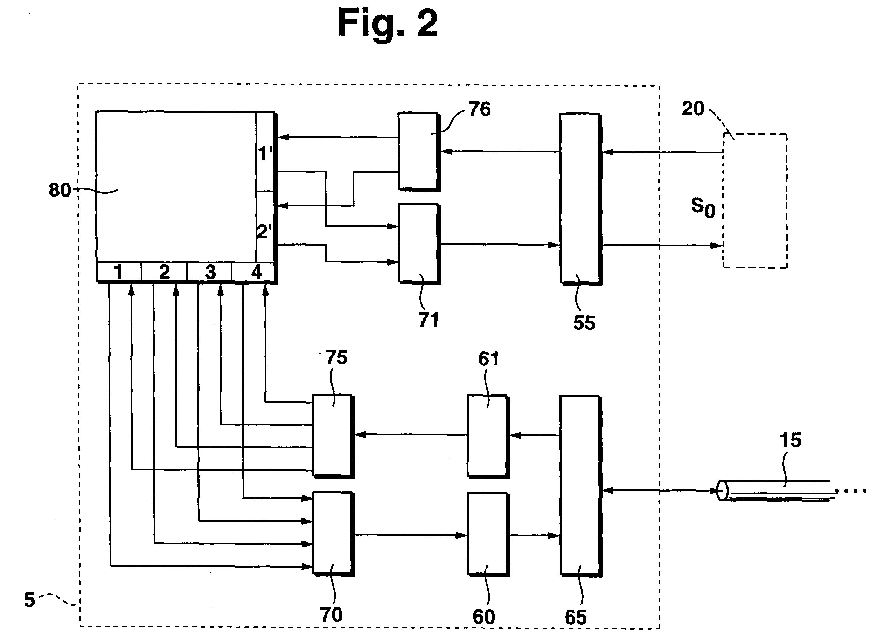

Die digitale Nebenstellenanlage 5 umfaßt gemäß Figur 2 einen Modulator 60 und einen Demodulator 61, die über eine erste Zugangssteuerung 65 mit dem ersten rückkanalfähigen Breitbandkabel 15 verbunden sind. Der Modulator 60 ist über einen ersten Multiplexer 70 mit einem ersten Koppelfeld 80 verbunden. Der Demodulator 61 ist über einen ersten Demultiplexer 75 mit dem Koppelfeld 80 verbunden. An das Koppelfeld 80 sind ein zweiter Multiplexer 71 und ein zweiter Demultiplexer 76 angeschlossen und über eine zweite Zugangssteuerung 55 mit der ISDN-Sₒ-Schnittstelle 20 verbunden. Über die ISDN-Sₒ-Schnittstelle 20 erfolgt der Zugang zum Fernsprechnetz. Über das erste rückkanalfähige Breitbandkabel 15 und die Frequenzweiche 25 erfolgt der Zugang zu den Funkanlagen 11.

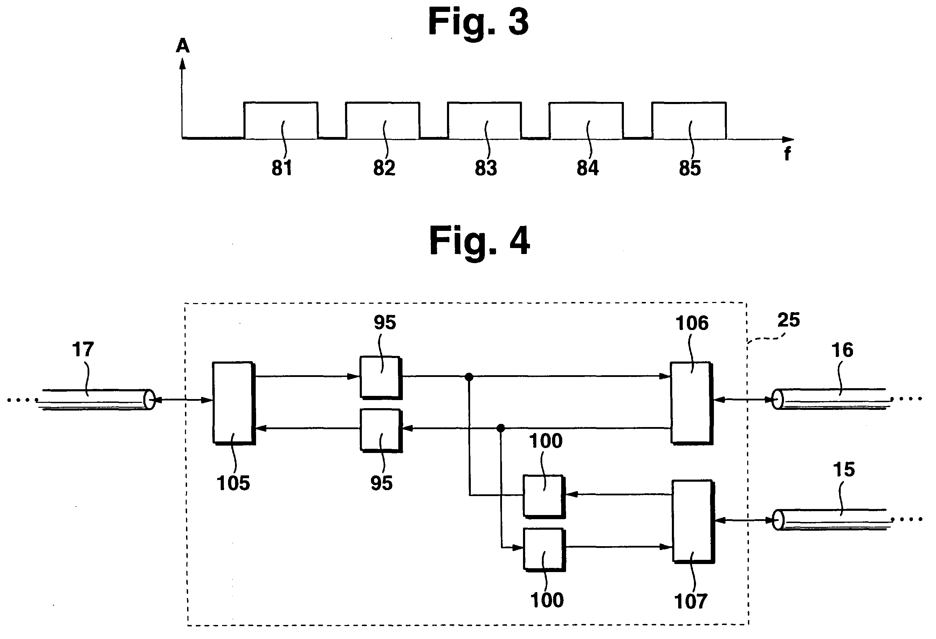

Gemäß dem Ausführungsbeispiel nach Figur 2 erfolgt eine Verbindung der digitalen Nebenstellenanlage 5 mit dem Fernsprechnetz über zwei Sprachkanäle 1' und 2'. Der zweite Demultiplexer 76 trennt die beiden Sprachkanäle und führt sie dem Koppelfeld 80 zu. Von dort werden sie auf vier Sprachkanäle 1, 2, 3 und 4 verteilt und im ersten Multiplexer 70 wieder zu einem Signal zusammengefaßt. Der Modulator 60 hat dann die Aufgabe das gemultiplexte Signal auf einen HF-Träger aufzumodulieren, der in einem freien Bereich 82, 84 des rückkanalfähigen Breitbandkabels 15 gemäß Figur 3 liegt. Über die erste Zugangssteuerung 65 wird das erzeugte HF-Signal in das erste rückkanalfähige Breitbandkabel 15 eingespeist. Umgekehrt werden HF-Signale, die vom ersten rückkanalfähigen Breitbandkabel 15 in die digitale Nebenstellenanlage 5 gelangen, über die erste Zugangssteuerung 65 an den Demodulator 61 weitergegeben und dort demoduliert. Eine Aufteilung in die vier Sprachkanäle 1, 2, 3 und 4 erfolgt dann im ersten Demultiplexer 75, so daß die Fernsprechdaten anschließend vom Koppelfeld 80 in den zwei Sprachkanälen 1' und 2' an den zweiten Multiplexer 71 abgegeben, dort zu einem Signal zusammengefaßt und über die zweite Zugangssteuerung 55 an die ISDN-Sₒ-Schnittstelle 20 zur Weiterleitung an das Fernsprechnetz abgegeben werden können.

In Figur 3 ist schematisch die Aufteilung des Frequenzbandes des zweiten rückkanalfähigen Breitbandkabels 16 dargestellt. Drei voneinander getrennte Frequenzbereiche 81, 83 und 85 sind dabei zur Übertragung von Rundfunk- und/oder Fernsehrundfunksignalen reserviert. Zwischen den drei reservierten Frequenzbereichen 81, 83 und 85 liegt jeweils ein freier Bereich 82 beziehungsweise 84, der zur Übertragung der Fernsprechdaten genutzt wird.

In Figur 4 kennzeichnet 25 eine Frequenzweiche, an die die drei rückkanalfähigen Breitbandkabel 15, 16 und 17 angeschlossen sind. Das erste rückkanalfähige Breitbandkabel 15 ist dabei mit einer dritten Zugangssteuerung 107 verbunden, an die zwei Filter 100 zur Selektion der für die Fernsprechdaten verwendeten freien Bereiche 82 und 84 angeschlossen sind. Die beiden Filter 100 sind außerdem über eine vierte Zugangssteuerung 106 mit dem zweiten rückkanalfähigen Breitbandkabel 16 und mit jeweils einem Filter 95 zur Selektion der Frequenzbereiche 81, 83 und 85 für Rundfunk- und/oder Fernsehrundfunksignale verbunden. Die beiden Filter 95 für die Rundfunk- und/oder Fernsehrundfunksignale sind an eine fünfte Zugangssteuerung 105 angeschlossen, die mit dem dritten rückkanalfähigen Breitbandkabel 17 verbunden ist.

Aufgrund der beiden Filter 100 für die Fernsprechdaten in den Frequenzbereichen 82 und 84 sind auf dem ersten rückkanalfähigen Breitbandkabel 15 nur diese beiden Frequenzbereiche 82 und 84 belegbar. Aufgrund der beiden Filter 95 für Rundfunk- und/oder Fernsehrundfunksignale in den Frequenzbereichen 81, 83 und 85 sind im dritten rückkanalfähigen Breitbandkabel 17 nur diese drei Frequenzbereiche 81, 83 und 85 belegbar. Nur im zweiten rückkanalfähigen Breitbandkabel 16 sind alle fünf Frequenzbereiche 81, 82, 83, 84 und 85 für die Fernsprechdaten und die Rundfunk-und/oder Fernsehrundfunksignale belegbar. Auf diese Weise wird verhindert, daß Fernsprechdaten über das dritte rückkanalfähige Breitbandkabel 17 in die Kopfstation 90 und Rundfunk- und/oder Fernsehrundfunksignale über das erste rückkanalfähige Breitbandkabel 15 in die digitale Nebenstellenanlage 5 gelangen. Das zweite rückkanalfähige Breitbandkabel 16 mit den 5 belegten Frequenzbereichen 81 bis 85 dient dann der Fernsprechversorgung und der Rundfunk- und/oder Fernsehrundfunkversorgung im Wohnblock 10. Die mit Hilfe der Frequenzweiche 25 durchgeführte Richtungstrennung der Fernsprech- und Rundfunk- bzw. Fernsehrundfunksignale kann auch durch einen Richtkoppler realisiert werden. In einem solchen Fall kennzeichnet das Bezugszeichen 25 in Figur 1 den Richtkoppler, über den dann die Einspeisung der Fernseh- und/oder Rundfunksignale von der Kopfstation 90 und der Fernsprechdaten von der digitalen Nebenstellenanlage 5 in das zweite rückkanalfähige Breitbandkabel 16 erfolgt.

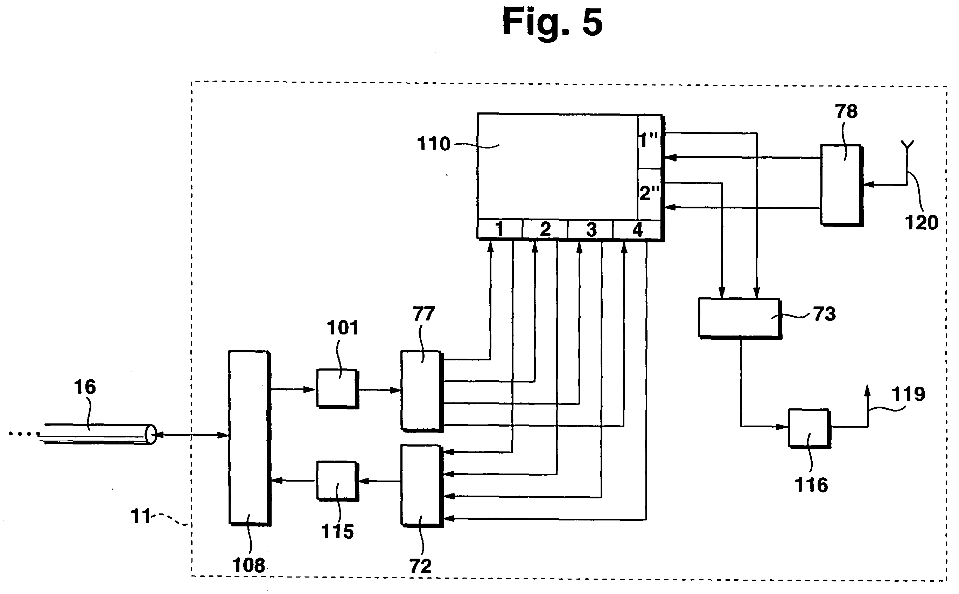

In Figur 5 kennzeichnet 11 eine Funkanlage, die über eine sechste Zugangssteurung 108 mit dem zweiten rückkanalfähigen Breitbandkabel 16 verbunden ist. Die sechste Zugangsteuerung 108 ist über eine Filtereinrichtung 101 und einen dritten Demultiplexer 77 mit einem zweiten Koppelfeld 110 verbunden. An das zweite Koppelfeld 110 ist ein dritter Multiplexer 73 angeschlossen, der über einen ersten Frequenzumsetzer 116 mit einer Sendeantenne 119 verbunden ist. Weiterhin ist eine Empfangsantenne 120 über einen vierten Demultiplexer 78 an das zweite Koppelfeld 110 angeschlossen. Weiterhin ist das zweite Koppelfeld 110 über einen vierten Multiplexer 72 und einen zweiten Frequenzumsetzer 115 mit der sechsten Zugangssteuerung 108 verbunden.

Die von der sechsten Zugangssteuerung 108 empfangenen Signale des zweiten rückkanalfähigen Breitbandkabels 16 enthalten in den beiden freien Bereichen 82 und 84 die vier Sprachkanäle 1, 2, 3 und 4, die von der digitalen Nebenstellenanlage 5 in das erste rückkanalfähige Breitbandkabel 15 eingespeist wurden. In der Filtereinrichtung 101 werden diese freien Bereiche 82 und 84 selektiert und anschließend vom dritten Demultiplexer 77 voneinander getrennt und dem zweiten Koppelfeld 110 zugeführt. Das zweite Koppelfeld 110 verteilt die vier ankommenden Sprachkanäle 1, 2, 3 und 4 auf zwei Sprachkanäle 1'' und 2 '', die im dritten Multiplexer 73 wiederum zu einem Signal zusammengefaßt und im ersten Frequenzumsetzer 116 in die Frequenz von vorgesehenen Funk-Kanälen zum Datenaustausch mit schnurlosen Telefonen 45 umgesetzt und von der Sendeantenne 119 abgestrahlt werden. Die von den schnurlosen Telefonen 45 in den vorgesehenen Funk-Kanälen ausgesendeten Fernsprechsignale werden von der Empfangsantenne 120 empfangen. Der vierte Demultiplexer 78 trennt die empfangenen Funk-Kanäle. Die beiden auf diese Weise vom zweiten Koppelfeld 110 empfangenen Sprachkanäle 1'' und 2'' werden im zweiten Koppelfeld 110 auf die vier Sprachkanäle 1,2, 3 und 4 verteilt, im vierten Multiplexer 72 wieder zu einem Signal zusammengefaßt und im zweiten Frequenzumsetzer 115 in die Frequenz der freien Bereiche 82 und 84 des zweiten rückkanalfähigen Breitbandkabels 16 umgesetzt. Über die sechste Zugangssteuerung 108 gelangen die auf diese Weise umgesetzten Fernsprechdaten in das zweite rückkanalfähige Breitbandkabel 16. Über das Koppelfeld 110 wird auch der Internverkehr innerhalb der zugehörigen Funkzelle 40 abgewickelt. Die Dimension der beiden Koppelfelder 80 und 110 ist je nach Bedarf zu wählen. Die hier gewählten Dimensionen von jeweils zwei mal vier sind lediglich zur Veranschaulichung der Funktionsweise der Erfindung gewählt.

Bei anderen Funkanlagen, beispielsweise nach dem DECT-Standard, ist die Verwendung von Multiplexern und Demultiplexern sowie eines Koppelfeldes aufgrund der vergleichsweise geringen Größe der entsprechenden Funkzelle und der damit verbundenen im allgemeinen geringen Teilnehmerzahl innerhalb der Funkzelle nicht vorgesehen. Vielmehr wird bei Verwendung solcher Funkanlagen das Spektrum für die Funkübertragung nach einem freien Bereich abgetastet und die Übertragung dann in diesem Bereich durchgeführt.

Als rückkanalfähige Breitbandkabel 15, 16 und 17 können Koaxialkabel für TV-Übertragung verwendet werden. Es ist auch die Verwendung von Lichtwellenleitern, wie beispielsweise Glas- oder Plastikfasern für die rückkanalfähigen Breitbandkabel 15, 16 und 17 möglich.

## Patentansprüche

1. Verfahren zum Betreiben eines Telefonnetzes mit einer Auswerteeinrichtung (5), in der auf einer Telefonleitung ankommende Daten einem Hochfrequenzträger aufmoduliert werden, der in einem freien Bereich (82, 84) eines rückkanalfähigen Breitbandkabels (15, 16) liegt und in dieses eingespeist wird, dadurch gekennzeichnet, daß an das Breitbandkabel (15, 16) in vorgegebenen Abständen auf diesen Bereich abgestimmte Funkanlagen (11) angeschlossen werden, die diese Daten auf vorgegebenen Frequenzen abstrahlen.

2. Verfahren nach Anspruch 1, dadurch gekennzeichnet, daß als rückkanalfähiges Breitbandkabel (15, 16) ein Koaxialkabel für TV-Übertragung verwendet wird.

3. Verfahren nach Anspruch 1, dadurch gekennzeichnet, daß als rückkanalfähiges Breitbandkabel (15, 16) ein Lichtwellenleiter verwendet wird.

4. Verfahren nach Anspruch 1, 2 oder 3, dadurch gekennzeichnet, daß dem rückkanalfähigen Breitbandkabel (15, 16) über eine Frequenzweiche (25) neben dem HF-Träger mit den modulierten Daten Fernseh- und/oder Rundfunksignale eingespeist werden.

5. Verfahren nach einem der vorherigen Ansprüche, dadurch gekennzeichnet, daß dem rückkanalfähigen Breitbandkabel (15, 16) über einen Richtkoppler (25) neben dem HF-Träger mit den modulierten Daten Fernseh- und/oder Rundfunksignale eingespeist werden.

6. Verfahren nach einem der vorherigen Ansprüche, dadurch gekennzeichnet, daß das in den Funkanlagen (11) ankommende HF-Signal mit den modulierten Daten in die Frequenz von vorgesehenen Funk-Kanälen umgesetzt wird.

7. Digitale Telefonanlage (5) mit mindestens einer Funkanlage (11), dadurch gekennzeichnet, daß ein Modulator (60) vorgesehen ist, in dem die auf einer Telefonleitung in die digitale Telefonanlage (5) einlaufenden Daten auf einen HF-Träger aufmoduliert werden, daß ein Demodulator (61) vorgesehen ist, in dem die in die digitale Telefonanlage (5) einlaufenden HF-Signale demoduliert werden, daß der Modulator (60) und der Demodulator (61) über eine Zugangssteuerung (65) mit einem rückkanalfähigen Breitbandkabel (15, 16) verbunden sind und daß die mindestens eine runkanlage (11) über das rückkanalfähige Breitbandkabel (15, 16) mit der digitalen Telefonanlage (5) verbunden ist.

8. Digitale Telefonanlage (5) nach Anspruch 7, dadurch gekennzeichnet, daß eine Frequenzweiche (25) vorgesehen ist, über die Fernseh- und/oder Rundfunksignale von einer Kopfstation (90) in das rückkanalfähige Breitbandkabel (15, 16) eingespeist werden.

9. Digitale Telefonanlage (5) nach Anspruch 8, dadurch gekennzeichnet, daß die Frequenzweiche (25) Filtereinrichtungen (95) für Fernseh- und/oder Rundfunksignale und Filtereinrichtungen (100) für HF-Signale mit aufmodulierten Fernsprechdaten umfaßt, so daß keine Fernseh- beziehungsweise Rundfunkdaten in das Telefonnetz und keine Fernsprechdaten in die Kopfstation (90) gelangen.

10. Digitale Telefonanlage (5) nach Anspruch 7, 8 oder 9, dadurch gekennzeichnet, daß ein Richtkoppler (25) vorgesehen ist, über den Fernseh- und/oder Rundfunksignale von einer Kopfstation (90) in das rückkanalfähige Breitbandkabel (15, 16) eingespeist werden.

11. Digitale Telefonanlage (5) nach einem der Ansprüche 7 bis 10, dadurch gekennzeichnet, daß die mindestens eine Funkanlage (11) eine Filtereinrichtung (101) für die Selektion eines auf dem rückkanalfähigen Breitbandkabel (15, 16) ankommenden HF-Signals mit aufmodulierten Fernsprechdaten, eine erste Frequenzumsetzeinrichtung (116) zur Umsetzung des HF-Signals mit den aufmodulierten Fernsprechdaten in die Frequenz von vorgesehenen Funk-Kanälen und eine zweite Frequenzumsetzeinrichtung (115) zur Umsetzung der Frequenz von vorgesehenen Funk-Kanälen in die Frequenz eines freien Bereichs (82, 84) im rückkanalfähigen Breitbandkabel (15, 16) aufweist.

12. Digitale Telefonanlage (5) nach einem der Ansprüche 7 bis 11, dadurch gekennzeichnet, daß die digitale Telefonanlage (5) eine digitale Nebenstellenanlage ist.
